# EUROPEAN PATENT SPECIFICATION

(11) **EP 3 004 982 B1**
(45) Date of publication and mention of the grant of the patent: **10.04.2024**
(21) Application number: 14739251.8
(22) Date of filing: 02.06.2014
(51) Int. Cl.: G02F 1/167, G02F 1/16761, G02F 1/16762, G02F 1/1685

(54) **ELECTROPHORETIC DISPLAY**
ELEKTROPHORETISCHE ANZEIGE
ÉCRAN ÉLECTROPHORÉTIQUE

(30) Priority: 07.06.2013 NL 2010936
(43) Date of publication of application: 13.04.2016
(73) Proprietor: eLstar Dynamics Patents B.V., 3235 CD Rockanje (NL)
(72) Inventor: AMESZ, Henricus Johannes, NL-3072 AP Rotterdam (NL)
(74) Representative: DeltaPatents B.V.
(86) International application number: PCT/NL2014/050350
(87) International publication number: WO 2014/196853

(56) References cited:
- WO-A1-2011/012499
- WO-A1-2011/131689
- WO-A2-2004/042464
- JP-A- 2007 072 349
- US-A1- 2003 011 869
- US-B1- 6 639 580
- A. RAMOS ET AL: "Pumping of liquids with ac voltages applied to asymmetric pairs of microelectrodes", PHYSICAL REVIEW E, vol. 67, no. 5, 1 May 2003 (2003-05-01), XP055150009, ISSN: 1063-651X, DOI: 10.1103/PhysRevE.67.056302

## Description

### FIELD OF THE INVENTION

The present invention is in the field of an electrophoretic display device. The invention further relates to a use of the electrophoretic display device.

### BACKGROUND OF THE INVENTION

Electrophoretic display devices are a relatively new technique of pixilated display devices in which charged pigment particles are moved to generate a required pigmentation of a pixel. Examples of electrophoretic display devices may be found in the international patent application US2006/0227196. This patent application discloses a display device which comprises two substrates. One of the substrates is transparent and is provided with a single electrode which is referred to as the counter electrode. This counter electrode is in other literature also referred to as common electrode or backplane electrode. The other substrate is provided with picture electrodes which comprise row and column electrodes. A display element or pixel is associated with an intersection of a row electrode and a column electrode. Electrophoretic ink is provided between the pixel electrode and the common electrode. The electrophoretic ink comprises multiple microcapsules of about 10 to 50 microns. Each microcapsule comprises positively charged white particles and negative charge black particles suspended in a fluid. When a positive voltage is applied to the pixel electrode with respect to the common electrode, the positively charged white particles move to the side of the micro capsule directed to the transparent substrate on which the common electrode is present and a viewer will see a white display element. Simultaneously, the black particles move to the pixel electrode at the opposite side of the microcapsule where they are hidden to the viewer. By applying a negative voltage to the pixel electrode with respect to the common electrode, the black particles move to the common electrode at the side of the micro capsule directed to the transparent substrate and the display element appears dark to a viewer. When the voltage is removed, the display device remains in the acquired state and thus exhibits a bi-stable character. The electrophoretic ink display with its black and white particles is particularly useful as an electronic book. Grey scales may be created in the display device by controlling the amount of particles that move to the common electrode at the top of the microcapsules.
A known type of electrophoretic display devices comprise in-plane switching of the charged particles. Such an electrophoretic display device is, for example, known from US 2005275933. In this patent application a display panel is disclosed in which electrophoretic material is sandwiched between a first and a second substrate. A pixel of said display further comprises a first and second electrode for locally controlling the material of said electrophoretic layer. The first and second electrodes are positioned on essentially the same distance from the first substrate so that an essentially lateral field is generated in said electrophoretic layer which is used to move the particles in and out of the light path of the pixel of the display, as such defining the transmission of the pixel.

Some further documents recite recent developments in electrophoretic displays.

US2009/027762 (A1) recites electrophoretic displays and materials useful in fabricating such displays. In particular, encapsulated displays are recited. The encapsulated displays move a fluid, possibly upon application of an electric field. It is noted that such a fluid is expected to be limited in freedom to move. Further the capsule will move too slow for the present application. Typically the capsules are relatively large, in fact too large (in the order of 5-400 micrometers (µm)). Such capsules can not be aligned properly. It is virtually impossible to obtain an even distribution and to realize a required speed of changing a pixel. Such capsules are considered not applicable to the present invention.

WO2010015979 (A1) recites a moving particle display device comprises an array of display cells, each cell comprising an enclosed volume containing display particles. The display cells are the disposed between the first and second electrode arrangements, and the particles are provided for movement between a first region adjacent the first electrode arrangement and a second region adjacent the second electrode arrangement. Each cell is associated with a group of electrodes (used to control the particle movement within the cell, wherein for most of the cells, the group of electrodes is arranged to provide asymmetry in the electric field lines in the enclosed volume, thereby to influence the particle flow conditions within the display cell. This document has typically similar drawbacks as other prior art mentioned.

US2005104843 (A1) recites an electrophoretic display device for generating a colored image that has pixels each having a medium that is substantially transparent in the optical spectral range and at least two types of independently controllable electrophoretic particles. The particle species absorb certain wavelengths whereas they are transparent (and basically non-scattering) for light that is absorbed in other particle species. By moving these particles in/out a visible area of the pixel by generating electric fields color absorption can be controlled at will. Despite apparent advantages amongst others particles can not move quick enough. Therefore the pixels are considered too slow for practical purpose. Such can also be considered for the recitation of WO2008/020355 A2, wherein particles are moved in a two stage process. Despite an improvement in this respect present inventors have found that switching times are still not sufficient.

Likewise US2004/239613 A1 and US 2007/120814 A1 recites some generic features, such as use of various types of colored particles, and stacked pixels.

Incidentally GB 2463266 (A) recites an electronic document reading device, the device having a front, display surface and a device rear surface. The device preferably comprises an electrophoretic display and a UV filter.

A benefit of the in-plane switching of charged particles is that the electrophoretic display device may comprise a transparent state, allowing a choice of reflector or possibly backlight.

However, it is relatively difficult to control the electrical field and particle motion distribution accurately enough to provide a homogenous pixel absorbance in the "dark" state.

Also switching from a first state to a second state is relatively slow; typically too slow for many applications, even with recently improved devices. It is noted that typically prior art particles move at a speed of less than about 1 mm per second, which is at least ten times too slow.

The requirements of relative fast switching (time) and bi-stable character of an electrophoretic pixel are conflicting, and have not been adequately resolved yet. Even further, some of the proposed solutions introduce further problems, such as a remaining haze, instable storage of the pigments, electric breakdown of a charged pixel, etc. So despite recent developments, no final solutions relating to working devices have been provided.

It is noted that some major companies developing displays have stopped to develop electrophoretic displays, being discouraged by negative results, complexity of the technology, and lack of prospect. For similar reason providers of pigmented particles had stopped further development as well.

It is an objective of the present invention to overcome disadvantages of the prior art electrophoretic display device without jeopardizing functionality and advantages.

Reference is made to US patent 6639580, with title "ELECTROPHORETIC DISPLAY DEVICE AND METHOD FOR ADDRESSING DISPLAY DEVICE". Reference is made to PCT patent application WO 2011/012499, with title "Electrophoretic display device".

### SUMMARY OF THE INVENTION

The present invention is defined in the claims.

The present invention relies on earlier incomplete research and development by IRX Technologies B.V. For that reason and for better understanding of the underlying technology reference is made to publications WO 2011/012499 A1 and WO2011/131689 A1. Various aspects, examples, advantages and so forth may be in principle one to one applicable to the present invention. The present invention provides amongst others an improved layout in view of the prior art. Despite a negative outlook in the field the present development came as a surprise, especially in that some apparent road blocks had been taken away by inventors.

It has been found that a major disadvantage of prior art devices is that they switch relatively slowly from a first to a second state. Surprisingly by reducing a size of the pixel switching times have been reduced significantly, in fact by a factor of about 4-16 (from 300 um to respectively 150 µm and 75 µm. The improvement is on top of earlier improvements achieved by IRX, which is a further reduction of switching times by the above factor. A switching time is now in considerably less than 10 mseconds, depending on the size of the pixels (the smaller the better) down to 0.1 mseconds. It is noted that smaller pixels complicate electronics somewhat, slowing down switching times. It is noted that typical pixel-sizes for monitors are quite large, and considered sufficiently detailed for intended use. For instance a train departure information screen has a pixel density of 11 DPI, a plasma screen of about 25 DPI, an advanced computer monitor of about 50 DPI, and small devices of about 100 DPI to about 200 DPI (having pixel sizes of 2300, 1000, 500, 250 and 125 um, respectively). In view thereof there is no need to reduce a pixel size; in fact such is discouraged as costs of the pixel, complexity, production process, reliability and accordingly of the device increase rapidly with reduction in size. Even further inventors were initially discouraged further by the fact that using an optical microscope to observe fluid and particle behavior, and to control a pixel, it was not possible to go to smaller dimensions, i.e. smaller than 300 um.

It has been found that charged particles do not remain in the storage area for a sufficiently long time. For prior art devices particles remain in a storage area during less than a few seconds, during which the aperture area is almost fully covered with particles, therewith deleting any image. Thereto a restrictor is provided. As a result both the switching time and bi-stable time are acceptable. The switching time is below 1 second, typically below 500 mseconds, such as below 350 mseconds, whereas the bi-stable time is above 10 seconds, typically above 120 seconds. The present restrictor is preferably a switchable restrictor, i.e. it may be in an active state or in a passive state. The restrictor especially improves the bi-stable time by at least a factor, such by at least two times, and typically by at least ten times. Thereby the restrictor makes it possible to use the present pixels in many envisaged applications, whereas without the restrictor effectively the pixels can not be put into practical use, albeit at the expense of some power consumption.

An important advantage of the present pixel and device is that they can be read in full sunlight.

Even further the present pixel and device are fully adaptable, e.g. to changing light conditions. As a result a large number of novel applications and uses come into sight.

Thereby the present invention provides a solution to one or more of the above mentioned problems.

Advantages of the present description are detailed throughout the description.

### DETAILED DESCRIPTION OF THE INVENTION

The present invention relates in a first aspect to a pixel for use in a fast switchable electrophoretic display as defined in appended claim 1, comprising inter alia at least one aperture area being visible. As mentioned above the present pixel can be switched relatively quick, in the order of (a few) milliseconds, which is considered fast enough for most applications. The present pixel comprises an aperture, for allowing passage of light, in principle into and out of the pixel. It is noted that a pixel is confined by e.g. an upper transparent glass plate, protecting the pixel from the environment. The upper part is visible to a user. Part of the upper part relates to an aperture area. The aperture area may comprise further optical elements, such as a lens, e.g. a Fresnel lens, a prism, etc. Another part comprises further functional elements of the pixel, typically (intentionally) not transparent to light.

It is noted that providing solutions with many mutually conflicting parameters is at least challenging. Despite research and development over the last decade(s) no working devices have been provided.

The pixel comprises a fluid (or liquid). The fluid may be any suitable fluid and a combination of suitable fluids. It is preferred to use a relatively low viscosity fluid, such as having a dynamic viscosity of 1 mPa.s or less. The fluid comprises at least one type of pigment particles having a diameter smaller than 500 nm. It has been found that these particles provide a good distribution of particles over the present (field) electrode. In view of an electro-magnetic field to be applied the present particles are being chargeable or charged. Likewise magnetic particles may be used. A small charge per particle is found to be sufficient, such as from 0.1e to 10e per particle. A concentration of particles is in the order of 1-100 g/l. A size of an electric potential is in the order of 0.5-50 V, preferably from 1-20 V, such as 5-15 V. For the present pixel a relatively large potential is preferred, e.g. 15-10 V. It has been found that fluid behaviour is better at a higher voltage, e.g. in terms of flow, and switching time. It is preferred to have particles charge stabilized. As such a better performance e.g. in view of distribution over the field electrode, and faster and better controllable switching times are achieved.

The pixel further comprises at least two electrodes spaced apart for providing an electric-magnetic field, of which at least one electrode is an accumulation electrode and at least one electrode is a field electrode. The accumulation electrode accumulates particles when these are intended not to be visible, whereas the field electrode attracts particles when these are intended to be visible. As a consequence the at least one field electrode occupies a field electrode area, the field electrode area and aperture area largely coinciding. One electrode may relate to an electrically neutral (or ground) electrode. It is noted that the terms "accumulation" and "field" relate to a function intended by the respective electrodes.

In an example a thin-film transistor is applied to drive a pixel, optionally in combination with other drivers.

Further the pixel comprises at least one storage area for storing the at least one type of pigment particles out of sight. As a consequence the at least one storage area is adjacent to the at least one aperture area.

For improved performance, e.g. in terms of switching time, distribution of particles, durability, etc. it is preferred to have at least two accumulation electrodes and at least two field electrodes, more preferably at least one of each electrode located at a side of the pixel.

As mentioned above the present pixel is relatively small, having a length of the pixel being smaller than 250 µm, preferably smaller than 150 µm, more preferably smaller than 100 µm, such as smaller than 90 um. Present designs relate to a length of 150 um, of 85 µm, of 75 µm, and of 50 um. A smallest size considered at this point in time is about 25 um. Also combinations of sizes are envisaged; such could imply a standardized unit length of e.g. 75 um is used, and multiplicities thereof. Typically a width of the pixel has a similar or the same dimension. The present pixel now provides an optical resolution that is more than sufficient for any application considered at this point in time. In an example maps may be provided on a smartphone, having sufficient optical detail to find ones way. Further a reader can continue reading for a long period of time, without getting tired. It is noted that in this respect LCD-displays provide too much light.

In an example of the present pixel the fluid carries a charge. Such has been found to particularly advantageous, in similar terms as mentioned above.

It has been found that a disadvantage of the present pixels, and especially of smaller pixels, is that an electrical breakdown may occur. In order to prevent such a breakdown further measures may be incorporated. In an example the fluid has a reduced permittivity εᵣ of less than 10, preferably of less than 5. However, such change in permittivity typically involves further compounds, such as oils, which are not (fully) compatible with other constituents. Thereto further compounds/components may be added, such as a surfactant, an emulsifier, a polar compound, and a compound capable of forming a hydrogen bond.

In view of relatively quick switching times it has been found that the viscosity of the fluid is preferably less than 0.1 Pa*s, such as by using a mixture comprising ethylene glycol.

According to the invention, the present pixel has a rectangular shape, such as a square shape. In view of switching times these layouts have been found to perform optimally. By varying charges or otherwise a first side can be used for red particles, a second side for green particles, and a third side for blue particles, and so further. Such could be achieved by sub-dividing at least one side of a square pixel.

In an example of the present pixel the at least one type of pigment particles comprise one or more of white particles, red particles, green particles, blue particles, black particles. As such a combination of visible pigment particles may be provided, thereby obtaining any intended colour, in any intended brightness. In principle the same effect could be obtained by using one or more pigment particles that absorb (a specific wavelength (region) of) light. Likewise also reflective pigments may be used. The present small pixel size makes it possible to make e.g. in a matrix format a red pixel, adjacent to a blue pixel, adjacent to a green pixel, etc. As such a mixture of colours may be provided by activating an intended pixel, in an intended intensity, etc.

In an example of the present pixel each type of pigment particle carries a significantly different charge, such as one being charged positively, another negatively, a third with a small charge, and a fourth with a large charge, etc. In an example the charge is from 5*10⁻⁷-0.1 C/m², such as from 1*10⁻⁵-0.01 C/m². In an example the present pigment may change colour or appearance upon applying an electro-magnetic field, or likewise upon removing such a field.

In an example of the present pixel the pigment particles are smaller than 400 nm, preferably smaller than 100 nm, typically larger than 10 nm. In view of performance, switching times, distribution, etc. the above sizes are found to be optimal. It is preferred to provide a stable dispersion; as such the above sizes are preferred. The particle size is considered to be a measure of an averaged diameter thereof.

In an example the present fluid is provided in an amount of 1-100 gr/m², preferably 2-75 gr/m², more preferably 20-50 gr/m², such as 30-40 gr/m², and the present pigments are provided in an amount of 0.02-30 gr/m², preferably 0.05-10 gr/m², more preferably 0.5-5 gr/m², such as 1-3 gr/m².

In an example the present pixel further comprises a UV-filter. Such is not considered yet, however, inventors have identified that some of the elements inside a pixel and possibly a transparent layer are preferably protected from environmental effects, such as UV-light. In an example especially an electrode needs to be protected from UV-light.

In an example of the present pixel the aperture area is more than 90% transparent, preferably more than 95%. The aperture area may be made of glass and a suitable polymer, such as poly carbonate (Perspex). The material for the aperture, e.g. glass, may have a thickness of 0.2 µm - 2 mm. If a flexible pixel and/or display are required it is preferred to use a thin material. If some strength is required, a thicker material is preferred. It has been found that with such transparency energy consumption can even be further reduced. In this respect it is noted that the present pixel uses about 0.1% of prior art pixels, such as LCD-pixels. Such provides huge advantages, e.g. in terms of usage, reduced need for loading devices, smaller charge storing devices, etc. Especially when a power grid is not available such will be appreciated. It is noted that power consumption of e.g. smartphones is significant. Any reduction in power consumption will be beneficial to the earth.

In an example of the present pixel conducting lines are envisaged for providing an electro-magnetic field. The lines typically have a width of 1-5 µm, such as 3-4 um, and a thickness of 0.01-5 µm, such as 0.1-2 um, preferably having a low electrical resistance of 0.01-10 mΩ/cm. Preferably transparent conducting thin films are used, such as indium-tin-oxide, (Al and Ga) doped (10¹⁹-10²² carrier concentration/cm³) ZnO. Such transparent films can be used more abundantly, thereby creating a (more) homogeneous electro-magnetic field. Such a homogeneous field is considered relevant for obtaining (sufficient) bi-stability. In terms of a more homogeneous field also smaller pixel sizes have found to contribute positively.

In an example of the present pixel the at least one field electrode is at least partly transparent to visible light, preferably more than 95% transparent. In an example an upper electrode, e.g. in a stack of pixels, is preferably as transparent as possible. In a further example the at least one field electrode is at least partly reflective to visible light, preferably more than 95% reflective, such as when forming a "bottom" electrode, such as in a lowest pixel in a stack. Also combination of the above is envisaged.

According to the invention, the restrictor is a temperature sensitive gel. The temperature sensitive gel comprises polyisocyanopeptides, grafted with oligo(ethylene glycol) side chains are mentioned. These gels are found to increase the viscosity with increasing temperature in a drastic fashion. Such a gel is especially advantageous when using the present pixels at an elevated temperature, such as a window blind.

In an example a stack of present pixels is envisaged comprising at least two pixels according to the invention. In an example three pixels may be stacked, such as a red pigment comprising pixel, a green pigment comprising pixel, and a blue pigment comprising pixel.

In a second aspect the present invention relates to an electrophoretic display device, comprising one or more pixels according to the invention, and a driver circuit for driving the one or more pixels by providing an electro-magnetic field, typically an electrical field. The applied voltage is in an example 15-30 V, preferably being large enough to move particles. Preferably counter ions are present.

In an example the electrophoretic display device comprises at least one shared field electrode. The shared field electrode may be shared by at least two pixels, typically by a row or column of pixels.

A driver circuit for use in an electrophoretic display device according to the invention comprises a means for providing a time varying electro-magnetic field between the at least one field electrode and the at least one accumulation electrode. Therewith movement from charged pigment particles to and from an accumulation electrode and from and to a field electrode is effected. The driver circuit may further provide an electro-magnetic field for clearing pixels (removing charged particles), for driving pixels (introducing charged particles), for resetting pixels (moving charged particles to an initial position). And for applying a static charge, for remaining charged pixels in position occupied at a point in time. Also a field for refreshing may be provided, e.g. for having a similar or same amount of pixels in an earlier position.

In an example the driver circuit comprises a switch for providing a static electro-magnetic field or charge to one or more of the electrodes. In an example only very scarcely a static pulse, or likewise a refresh pulse is provided, such as once every two hours. The pulse may be short and at a low intensity.

In a third aspect the present invention relates to a use of an electrophoretic display device according to the invention or of a pixel according to the invention in a greenhouse for filtering at least one specific frequency, in a building for decorating, as a light filter in general, for providing a long term stable image, in teaching, for a magazine, for a newspaper, for a book, and combinations thereof. Likewise the present display may be used as a sun or light screen.

In a fourth aspect the present invention relates to an electronic device comprising an electrophoretic display device according to the invention or a pixel according to the invention, such as a smartphone, a mobile phone, a tablet, a note-book, a computer, an e-book, magazine, a news-paper, a foldable screen, an advertisement, a pop-up screen, in a permanent wall, such as a glass wall, in an active or passive frequency filter, in an active or passive light intensity filter, an adaptive light system, and combinations thereof. A wall can for instance be designed towards a requirement of a user, e.g. in terms of colour, design, e.g. company design, company logo, company colour, in an adaptive manner. Signage is an option as well. As such an adaptive time sharing environment can be created, e.g. having a variable company logo. Likewise a window of a shop and the like may be adapted in a real-time mo-dus. It has been found that the present display can remain its quality over an extreme long period of time, e.g. 50 years or more; such a long period make applications for long term purpose, e.g. in buildings, possible.

As a consequence of very low energy consumption relatively large displays now can be made in an economic fashion. Also very high resolution devices become available, especially relevant if a device by nature can not be too large, such as for a mobile or smart phone. The present resolution may be in the order of 300 DPI, or better. A size of the device may be relatively small such as from 10 cm² (or smaller), up to very large scale, e.g. 1000 m². In fact building walls could be fully covered with the present display, which could relate to even larger displays, such as in a curtain wall. In other words a huge advantage of the present invention is that it can be up scaled to very large dimension, e.g. up to a length of 300 m.

It is noted that the present invention can be combined with e.g. a LCD-screen, keeping information much longer available for a reader and at a much lower energy consumption.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

The invention although described in detailed explanatory context may be best understood in conjunction with the accompanying examples and figures.

### SUMMARY OF FIGURES

Fig. 1 shows a top view of a hexagonal layout of a display.
Figs. 2a,b show a side view of an embodiment of the present pixel.
Fig. 3 shows a top view of an example of a display.

### DETAILED DESCRIPTION OF FIGURES

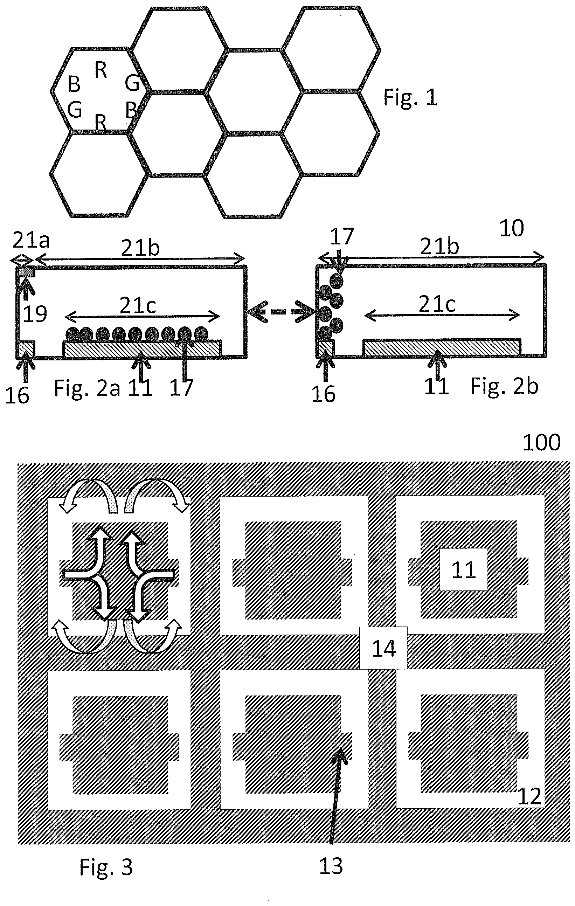

Fig. 1 shows a top view of a hexagonal layout of a display. Therein a first side may comprise red (R) pigmented particles, a second side blue (B) pigmented particles, and a third side green (G) pigmented particles, and so on. Such provides for a reliable and precise control of various types of pigmented particles.

Figs. 2 A and 2 B show a schematic cross-sectional view of an embodiment of a pixel 10 of an electrophoretic display device 100 according to the invention. The pixel 10 comprises charged pigment particles 17 which may move under control of an electro-magnetic field, typically an electric field. The pixel 10 comprises an aperture area 21b which is an area of the pixel 10 which is a visible part of the pixel 10. The aperture area may be substantially as large as the pixel area (fig. 2b), or somewhat smaller (fig. 2a). A pigmentation of this aperture area 21b determines the pigmentation as perceived by a viewer watching the electrophoretic display device 100 comprising the pixel 10. The pixel 10 further comprises a storage area 21a which is configured for storing charged pigment particles 17 away from the aperture area 21b. In the embodiment shown in Figs. 2a and 2b the storage area 21a comprises a shield 21a for shielding stored charged pigment particles 17 hidden from view. Such a shield 21a is fully optional. Alternative ways to generate a shielding of the charged pigment particles 17 from view is by using an opaque and substantially non-reflective accumulation electrode 16. However, the shielding 21a from view is not essential to the invention and even without the active shielding of the charged pigment particles 17 from view, the charge pigment particles 17 at the accumulation electrode 16 merely represent a dark rim or edge of the pixel 10. A part of the aperture area 21b comprises a field electrode 11. The field-electrode area 21c of the field electrode 11 is smaller compared to the dimension of the aperture 21b. Still the field-electrode area 21c of the field electrode 11 covers at least half of the aperture 21b to be able to change the pigmentation of the aperture 21b significantly using the charged pigment particles 17. A part of the storage area 21a comprises an accumulation electrode 16. The pixel 10 is configured for generating an electro-magnetic field between the accumulation electrode 16 and the field electrode 11 to move charged pigment particles 17 from the accumulation electrode 16 to the field electrode 11, or vice versa. If sufficient charged pigment particles 17 have migrated from the accumulation electrode 16 to the field electrode 11, or vice versa, the generated electrical field is switched off to stop the migration of particles and to create a static situation in which the pigmentation of the pixel 10 is determined via the charged pigment particles which have migrated.

The charged pigment particles 17 as used in the current pixel 10 have been selected sufficiently small to obtain a uniform distribution of charged pigment particles 17 across the field-electrode area 21c. The inventors have found that the charged pigment particles 17 behave in a different manner than known from the prior art when the dimension of the charged pigment particles 17 is reduced. Typically, when charged particles are collected on a charged electrode, the repellent force between the charged particles cause the charged particles to each find a position on the charged electrode in which the distance between individual particles is as large as possible. In practice, this means that normally (as in prior art) the charged particles all are arranged at an edge of the electrode, typically forming a rim at or around the electrode edges. The inventors have found that by reducing the dimensions of the charged pigment particles70 according to the invention, the distribution of the charged pigment particles 17 on a charged electrode is different. When the dimensions of the charged pigment particles 17 are below a certain threshold, the charged pigment particles 17 distribute substantially homogeneously across the whole surface of the charged electrode. This effect is beneficially used by the inventors to generate a pixel 10 for an electrophoretic display device 100 in which the pigmentation may be adapted by determining the amount of charged pigment particles 17 which are transferred from the accumulation electrode 16 to the field electrode 11. As soon as the charged pigment particles 17 arrive at the field electrode 11, the dimension of the charged pigment particles 17 allow them to behave differently than expected such that they start to cover the whole field-electrode area 21c homogeneously with charged pigment particles 17, rather than to only cover the field-electrode edges. Due to this homogeneous distribution of the charged pigment particles 17, the field-electrode area 21c always comprises a homogeneous pigmentation in which the intensity of the pigmentation is depending on the amount of charged pigment particles 17 which are collected at the field electrode 11.

A further benefit of the current invention is that the pigmentation generated may be maintained by maintaining a static charge on the field-electrode 11. Known in-plane electrophoretic display devices have a pair of electrodes arranged on either side of an aperture area. The pigmentation of such a known in- plane electrophoretic display device is generated by generating an electrical field between the pair of electrodes which determines the distribution of charged pigment particles between the pair of electrodes to determine a level of opaqueness determining the pigmentation of the pixel. However, due to the non-uniform electric field between the two electrodes in the known in-plane electrophoretic display device, a good uniformity of the pigmentation is difficult to obtain. In the pixel 10 according to the invention, the dimension of the charged pigment particles 17 is selected sufficiently small to obtain a uniform distribution on a charged electrode. As such, the distribution of the charged pigment particles 17 according to the invention always has a homogeneous distribution due to the nature of the charged pigment particles 17. This causes the electrophoretic display device 100 according to the invention to be easily addressable compared to known in-plane electrophoretic display devices.

Fig. 2b shows a first situation in which the charged pigment particles 17 all are accumulated at the accumulation electrode 16. Fig. 2a shows a second situation in which the charged pigment particles 17 all are homogeneously distributed across the field electrode 11. It will be clear to the person skilled in the art that any intermediate state may be possible and that a time-varying electric field between the accumulation electrode 16 and the field electrode 11 may be applied for determining the amount of charged pigment particles 17 which move between the accumulation electrode 16 and the field electrode 11.

In a preferred embodiment a major part of the charged pigment particles 17 of a pixel have a diameter smaller than 500 nanometers. The major part may, for example, relate to at least half of the charged pigment particles 17 present in the pixel 10. Still, over time, charged pigment particles 17 may, for example, clot to form some larger charged pigment particles. The charged pigment particles 17 do not necessarily have to have a symmetrical shape or a smooth shape. In a preferred embodiment the particle size of the major part of the charged pigment particles 17 is below 400 nanometers which is below the wavelength of the visible light. A benefit of having charged pigment particles 17 having a particle size below 400 nanometers is that possible scattering of visible light by the charged pigment particles 17 is reduced. As human visibility stops at 380 nanometers, using charged pigment particles 17 having a diameter less than 400 nanometers prevent possible scattering of substantially all of the light in the range visible to the human eye.

In the pixel 10 shown in Figs. 2A and 2B the field electrode 11 may be at least partially reflective to visible light. A benefit of this embodiment is that the electrophoretic display device 100 may use ambient light (not indicated) entered via the aperture area 21b and re-emitted via the aperture area 21b after reflection from the field electrode 11. As such, the electrophoretic display device 100 may be constituted of fewer components as no additional light-reflection layer may be required.

In an example of the pixel of figs. 2a,b an accumulation area is present at each side of the pixel (e.g. left and right in a rectangular pixel). In a further example thereof, or as an example, a first accumulation area comprises a first type of pigmented particle, such as black, green, red, or blue, and a second accumulation area comprises a second type of pigmented particles, e.g. blue. The different types of pigmented particles may carry a different charge.

In a further example of figs. 2a,b two or more pixels may be stacked.

In a further example of figs, 2a,b a field electrode, or likewise a bottom field electrode, may be reflective, e.g. mirror like.

In an example the pixel may further be provided with backlight, such as by LCD. In such a case the field electrode(s) are preferably largely transparent.

In a further example the field electrode may comprise two or more sub-field electrodes. A first sub-field electrode for a first pigmented particle, etc.

Fig. 3 shows a top view of a display 100 of pixels in which a fast liquid flow can be induced. The electrode pattern may be formed by applying a "common grid" or "common lines" (14) (often referred to as "storage electrode"), with pixel electrodes (also called "field electrodes") (11) placed in the "common grid" apertures or between the lines 14. Each pixel consists of an area that constitutes the "pump area" 13, which may be an area where a small gap between the "common grid" 14 that creates a high electric field. This field exerts a force on the electro-osmotic fluid, inducing fast liquid flow.

The liquid is then allowed to leave the pixel electrode again along the other edges of the display, where the pumping force is significantly smaller. A flow of liquid in the top left pixel is indicated by arrows. A similar flow may be present in other pixels as well, depending on presence of an electro-magnetic field applied. Further a release area 12 is indicated.

It should be appreciated that for commercial application it may be preferable to use one or more variations of the present system, which would be similar to the ones disclosed in the present application and are within the scope of the invention as defined by the appended claims.

## Claims

1. A pixel (10) for use in a fast switchable and bi-stable electrophoretic display device (100), a switching time of the pixel being below 1 second and a bi-stable time being above 10 seconds, the pixel (10) comprising
at least one aperture area (21b) being visible,
a fluid comprising at least one type of pigment particles (17), the particles (17) being chargeable or charged,
at least two electrodes (11, 16) spaced apart for providing an electric-magnetic field, of which at least one electrode is an accumulation electrode (16) and at least one electrode is a field electrode (11), wherein the at least one field electrode (11) occupies a field electrode area (21c), wherein the field electrode area (21c) is smaller than the aperture area (21b), but covers at least half of the aperture area (21b),
at least one storage area (21a) for storing the at least one type of pigment particles (17), wherein the at least one storage area (21a) is adjacent to the at least one aperture area (21b), wherein
the pixel (10) has a rectangular shape, and a length of the pixel (10) is smaller than 250 µm, preferably smaller than 150 µm, more preferably smaller than 100 µm, such as smaller than 90 µm, and
the pixel (10) comprises a restrictor for maintaining pigment particles (17) in the storage area,
**characterized in that**
the at least one type of pigment particles (17) has a diameter smaller than 500 nm,
the at least one storage area (21a) is arranged to store the at least one type of pigment particles (17) out of sight, and the restrictor is a temperature sensitive gel in the fluid, the gel having an increasing viscosity with increasing temperature, wherein the temperature sensitive gel comprises polyisocyanopeptides, grafted with oligo(ethylene glycol) side chains.

2. A pixel (10) according to claim 1, wherein the fluid carries a charge, and/or
wherein the fluid comprises one or more of a surfactant, an emulsifier, a polar compound, and a compound capable of forming a hydrogen bond, and/or
wherein the fluid has a relative permittivity εᵣ of less than 10, and a viscosity of less than 0.1 Pa*s.

3. A pixel (10) according to any of claims 1-2, wherein the at least one type of pigment particles (17) comprise one or more of white particles, red particles, green particles, blue particles, black particles, and/or
wherein the pigment particles (17) are smaller than 400 nm, preferably smaller than 100 nm, and typically larger than 10 nm.

4. A pixel (10) according to any of claims 1-3, further comprising a UV-filter, wherein the aperture area (21b) is more than 90% transparent, preferably more than 95%.

5. A pixel (10) according to any of claims 1-4, wherein the at least one field electrode (11) is at least partly transparent to visible light, preferably more than 95% transparent, or wherein the at least one field electrode (11) is at least partly reflective to visible light, preferably more than 95% reflective.

6. Stack of pixels comprising at least two pixels (10) according to any of claims 1-5.

7. Electrophoretic display device (100), comprising one or more pixels (10) according to any of claims 1-6, and
a driver circuit for driving the one or more pixels (10) by providing an electro-magnetic field.

8. Electrophoretic display device (100) according to claim 7, wherein the driver circuit comprises a means for providing a time varying electro-magnetic field between the at least one field electrode (11) and the at least one accumulation electrode (16).

9. Use of an electrophoretic display device (100) according to claim 7, claim 8, or of a pixel (10) according to any of claims 1-6 in a greenhouse for filtering at least one specific frequency, in a building for decorating, as a light filter in general, for providing a long term stable image, in teaching, for a magazine, for a newspaper, for a book, and combinations thereof.

10. Electronic device comprising an electrophoretic display device (100) according to claim 7, claim 8, or a pixel (10) according to any of claims 1-5, such as a smartphone, a mobile phone, a tablet, a note-book, a computer, an e-book, magazine, a news-paper, a foldable screen, an advertisement, a pop-up screen, in a permanent wall, such as a glass wall, in an active or passive frequency filter, in an active or passive light intensity filter, an adaptive light system, and combinations thereof,
wherein a size of the device is from 10 cm²-1000 m².

## Patentansprüche

1. Ein Pixel (10) zur Verwendung in einer schnell schaltbaren und bistabilen elektrophoretischen Anzeigevorrichtung (100), wobei eine Schaltzeit des Pixels unter 1 Sekunde und eine bistabile Zeit über 10 Sekunden liegt, wobei das Pixel (10) umfasst
mindestens einen Öffnungsbereich (21b), der sichtbar ist,
ein Fluid, das mindestens eine Art von Pigmentpartikeln (17) umfasst, wobei die Partikel (17) aufladbar oder aufgeladen sind,
mindestens zwei Elektroden (11, 16), die zur Bereitstellung eines elektromagnetischen Feldes beabstandet sind, von denen mindestens eine Elektrode eine Sammelelektrode (16) ist und mindestens eine Elektrode eine Feldelektrode (11) ist, wobei die mindestens eine Feldelektrode (11) einen Feldelektrodenbereich (21c) einnimmt, wobei der Feldelektrodenbereich (21c) kleiner ist als der Öffnungsbereich (21b), aber mindestens eine Hälfte des Öffnungsbereichs (21b) abdeckt,
mindestens einen Speicherbereich (21a) zum Speichern der mindestens einen Art von Pigmentpartikeln (17), wobei der mindestens eine Speicherbereich (21a) benachbart zu dem mindestens einen Öffnungsbereich (21b) ist, wobei
das Pixel (10) eine rechteckige Form aufweist, und eine Länge des Pixels (10) kleiner als 250 µm, vorzugsweise kleiner als 150 µm, bevorzugter kleiner als 100 µm, wie zum Beispiel kleiner als 90 µm, ist, und
das Pixel (10) einen Begrenzer zum Halten von Pigmentpartikeln (17) in dem Speicherbereich umfasst,
**dadurch gekennzeichnet, dass**
die mindestens eine Art von Pigmentpartikeln (17) einen Durchmesser von weniger als 500 nm aufweist,
der mindestens eine Speicherbereich (21a) angeordnet ist, um die mindestens eine Art von Pigmentpartikeln (17) außer Sicht zu speichern, und
der Begrenzer ein temperaturempfindliches Gel in dem Fluid ist, wobei das Gel eine mit zunehmender Temperatur zunehmende Viskosität aufweist, wobei das temperaturempfindliche Gel Polyisocyanopeptide umfasst, die mit Oligo(ethylenglykol)-Seitenketten gepfropft sind.

2. Ein Pixel (10) nach Anspruch 1, wobei das Fluid eine Ladung trägt, und/oder
wobei das Fluid ein oder mehrere von einem Tensid, einem Emulgator, einer polaren Verbindung und einer Verbindung, die zur Bildung einer Wasserstoffbrückenbindung fähig ist, umfasst, und/oder
wobei das Fluid eine relative Permittivität εᵣ von weniger als 10 und eine Viskosität von weniger als 0,1 Pa*s aufweist.

3. Ein Pixel (10) nach einem der Ansprüche 1-2, wobei die mindestens eine Art von Pigmentpartikeln (17) eines oder mehrere von weißen Partikeln, roten Partikeln, grünen Partikeln, blauen Partikeln, schwarzen Partikeln umfasst, und/oder
wobei die Pigmentpartikel (17) kleiner als 400 nm, vorzugsweise kleiner als 100 nm und typischerweise größer als 10 nm sind.

4. Ein Pixel (10) nach einem der Ansprüche 1-3, weiter umfassend einen UV-Filter, wobei der Öffnungsbereich (21b) zu mehr als 90 %, vorzugsweise zu mehr als 95 %, transparent ist.

5. Ein Pixel (10) nach einem der Ansprüche 1-4, wobei die mindestens eine Feldelektrode (11) für sichtbares Licht zumindest teilweise transparent ist, vorzugsweise zu mehr als 95 % transparent, oder wobei die mindestens eine Feldelektrode (11) für sichtbares Licht zumindest teilweise reflektierend ist, vorzugsweise zu mehr als 95 % reflektierend.

6. Pixel stapel, der mindestens zwei Pixel (10) nach einem der Ansprüche 1-5 umfasst

7. Elektrophoretische Anzeigevorrichtung (100), die ein oder mehrere Pixel (10) nach einem der Ansprüche 1-6 und
eine Treiberschaltung zum Antreiben des einen oder der mehreren Pixel (10) durch Bereitstellen eines elektromagnetischen Feldes umfasst.

8. Elektrophoretische Anzeigevorrichtung (100) nach Anspruch 7, wobei die Treiberschaltung ein Mittel zur Bereitstellung eines zeitlich variierenden elektromagnetischen Feldes zwischen der mindestens einen Feldelektrode (11) und der mindestens einen Sammelelektrode (16) umfasst.

9. Verwendung einer elektrophoretischen Anzeigevorrichtung (100) nach Anspruch 7, Anspruch 8 oder eines Pixels (10) nach einem der Ansprüche 1-6 in einem Gewächshaus zur Filterung mindestens einer spezifischen Frequenz, in einem Gebäude zur Dekoration, als Lichtfilter im Allgemeinen, zur Bereitstellung eines langzeitstabilen Bildes, im Unterricht, für eine Zeitschrift, für eine Zeitung, für ein Buch und Kombinationen davon.

10. Elektronische Vorrichtung, die eine elektrophoretische Anzeigevorrichtung (100) nach Anspruch 7, Anspruch 8 oder ein Pixel (10) nach einem der Ansprüche 1-5 umfasst, wie zum Beispiel ein Smartphone, ein Mobiltelefon, ein Tablet, ein Notebook, ein Computer, ein E-Book, eine Zeitschrift, eine Zeitung, ein faltbarer Bildschirm, eine Werbeanzeige, ein Pop-up-Bildschirm, in einer permanenten Wand, wie zum Beispiel einer Glaswand, in einem aktiven oder passiven Frequenzfilter, in einem aktiven oder passiven Lichtintensitätsfilter, ein adaptives Lichtsystem und Kombinationen davon,
wobei eine Größe der Vorrichtung von 10 cm²-1000 m² beträgt.

## Revendications

1. Un pixel (10) pour utilisation dans un dispositif d'affichage électrophorétique à commutation rapide et bistable (100), un temps de commutation du pixel étant inférieur à 1 seconde et un temps de bistabilité étant supérieur à 10 secondes, le pixel (10) comprenant
au moins une zone d'ouverture (21b) étant visible,
un fluide comprenant au moins un type de particules de pigment (17), les particules (17) étant chargeables ou chargées,
au moins deux électrodes (11, 16) espacées pour fournir un champ électromagnétique, dont au moins une électrode est une électrode d'accumulation (16) et au moins une électrode est une électrode de champ (11), dans lequel la au moins une électrode de champ (11) occupe une zone d'électrode de champ (21c), dans lequel la zone d'électrode de champ (21c) est inférieure à la zone d'ouverture (21b), mais recouvre au moins une moitié de la zone d'ouverture (21b),
au moins une zone de stockage (21a) pour stocker le au moins un type de particules de pigment (17), dans lequel la au moins une zone de stockage (21a) est adjacente à la au moins une zone d'ouverture (21b), dans lequel
le pixel (10) présente une forme rectangulaire, et une longueur du pixel (10) est inférieure à 250 µm, de préférence inférieure à 150 µm, plus préférentiellement inférieure à 100 µm, telle qu'inférieure à 90 µm, et
le pixel (10) comprend un élément de limitation pour maintenir des particules de pigment (17) dans la zone de stockage,
**caractérisé en ce que** le au moins un type de particules de pigment (17) présente un diamètre inférieur à 500 nm,
la au moins une zone de stockage (21a) est agencée pour stocker le au moins un type de particules de pigment (17) hors de vue, et
l'élément de limitation est un gel sensible à la température dans le fluide, le gel présentant une viscosité accrue suivant une hausse de la température, dans lequel le gel sensible à la température comprend des polyisocyanopeptides, greffés avec des chaînes latérales d'oligo(éthylène glycol).

2. Un pixel (10) selon la revendication 1, dans lequel le fluide porte une charge, et/ou
dans lequel le fluide comprend un ou plusieurs parmi un tensioactif, un émulsifiant, un composé polaire et un composé apte à former une liaison hydrogène, et/ou
dans lequel le fluide présente une permittivité relative εᵣ inférieure à 10, et une viscosité inférieure à 0,1 Pa*s.

3. Un pixel (10) selon l'une quelconque des revendications 1-2, dans lequel le au moins un type de particules de pigment (17) comprend une ou plusieurs parmi des particules blanches, des particules rouges, des particules vertes, des particules bleues, des particules noires, et/ou
dans lequel les particules de pigment (17) sont inférieures à 400 nm, de préférence inférieures à 100 nm, et généralement supérieures à 10 nm.

4. Un pixel (10) selon l'une quelconque des revendications 1-3, comprenant en outre un filtre UV, dans lequel la zone d'ouverture (21b) est transparente à plus de 90 %, de préférence à plus de 95 %.

5. Un pixel (10) selon l'une quelconque des revendications 1-4, dans lequel la au moins une électrode de champ (11) est au moins partiellement transparente à la lumière visible, de préférence transparente à plus de 95 %, ou dans lequel la au moins une électrode de champ (11) est au moins partiellement réfléchissante à la lumière visible, de préférence réfléchissante à plus de 95 %.

6. Pile de pixels comprenant au moins deux pixels (10) selon l'une quelconque des revendications 1-5.

7. Dispositif d'affichage électrophorétique (100), comprenant un ou plusieurs pixels (10) selon l'une quelconque des revendications 1-6, et
un circuit d'attaque pour exciter les un ou plusieurs pixels (10) en fournissant un champ électromagnétique.

8. Dispositif d'affichage électrophorétique (100) selon la revendication 7, dans lequel le circuit d'attaque comprend un moyen pour fournir un champ électromagnétique variable dans le temps entre la au moins une électrode de champ (11) et la au moins une électrode d'accumulation (16).

9. Utilisation d'un dispositif d'affichage électrophorétique (100) selon la revendication 7, la revendication 8, ou d'un pixel (10) selon l'une quelconque des revendications 1-6 dans une serre pour filtrer au moins une fréquence spécifique, dans un bâtiment en guise de décoration, en tant que filtre de lumière en général, pour fournir une image stable à long terme, dans un domaine de l'enseignement, pour un magazine, pour un journal, pour un livre, et des combinaisons de ceux-ci.

10. Dispositif électronique comprenant un dispositif d'affichage électrophorétique (100) selon la revendication 7, la revendication 8, ou un pixel (10) selon l'une quelconque des revendications 1-5, tel qu'un téléphone intelligent, un téléphone portable, une tablette, un ordinateur bloc-notes, un ordinateur, un livre numérique, un magazine, un journal, un écran pliable, une publicité, un écran contextuel, dans un mur permanent, tel qu'un mur de verre, dans un filtre de fréquence actif ou passif, dans un filtre d'intensité lumineuse actif ou passif, un système d'éclairage adaptatif, et des combinaisons de ceux-ci,
dans lequel une dimension du dispositif va de 10 cm²-1 000 m².
